# EUROPÄISCHE PATENTSCHRIFT

(11) **EP 2 567 644 B1**
(45) Veröffentlichungstag und Bekanntmachung des Hinweises auf die Patenterteilung: **05.08.2015**
(21) Anmeldenummer: 12182646.5
(22) Anmeldetag: 31.08.2012
(51) Int. Cl.: A47J 31/36

(54) **Vorrichtung zur volumenunabhängigen Tresterverpressung**
Device for volume-independent marc pressing
Dispositif de compression de marc de raisin indépendamment du volume

(30) Priorität: 09.09.2011 DE 102011082435
(43) Veröffentlichungstag der Anmeldung: 13.03.2013
(73) Patentinhaber: BSH Hausgeräte GmbH, 81739 München (DE)
(72) Erfinder: Höglauer, Michael, 83246 Unterwössen (DE); Ostermaier, Albert, 83371 Stein a.d. Traun (DE); Steffl, Michael, 83250 Marquartstein (DE)

(56) Entgegenhaltungen:
- EP-A1- 2 229 848
- WO-A2-2009/022364
- DE-U1-202009 000 258

## Beschreibung

Die Erfindung betrifft eine Kniehebel-Brühgruppe eines Kaffeevollautomaten für Haushaltszwecke. Die Brühgruppe umfasst zwei parallel angeordnete Seitenwände als Gehäusebestandteile mit einer dazwischen angeordneten Brühkammer, mit einem Brühzylinder, mit einem darin verschiebbar gelagerten Brühkolben, mit einem an der Brühkammer drehbar gelagerten Steuerhebel zum Antrieb des Brühkolbens, mit einer Kulisse an den Seitenwänden und mit Auslenkmitteln an der Kulisse zur Auslenkung des Steuerhebels zumindest beim Auswurf des Tresters.

Die DE 20 2009 000258 U1 betrifft eine Kniehebel-Brühgruppe mit einer Brühkammer zur Aufnahme und zum Auslaugen von Kaffeepulver, mit einem Brühkolben zum Verdichten von Kaffeepulver in der Brühkammer und zum Auswurf des verdichteten Kaffeepulvers aus der Brühkammer und mit einer Federeinrichtung zum Antrieb des Brühkolbens, wobei die Federeinrichtung im Lastbereich der Verdichtung eine weitgehend lineare und flache Federkennlinie aufweist. Damit gelingt es, beim Schließen der Brühgruppe auch unterschiedliche Pulvermengen mit weitgehend gleicher Verdichtungskraft und damit zu einem weitgehend gleichen Verdichtungsgrad gegen ein feststehendes Brühkammeroberteil zu verschieben und zu verpressen. Die Verpressung hat nicht nur für das Auslaugen des Kaffeepulvers eine Bedeutung, sondern auch für das anschließende Ausstoßen des Tresters aus der Brühkammer. Nur ein ausreichend entfeuchteter und verpresster Trester lässt sich vollständig auswerfen. Ist er zu trocken, kann der Tresterkuchen zerfallen und beim Abstreifen teilweise zurückbleiben. Ist er zu feucht und zu wenig verpresst, können verschlammende Tresterreste in der Brühkammer verbleiben und als Verschmutzungen eine Fehlermeldung auslösen.

Die WO 2009/022364 A2 offenbart eine Brühgruppe mit einem Sitz, einem Kolben und einem Gegenkolben wobei der genannte Sitz, der genannte Kolben und der genannte Gegenkolben gegenüber einander wenigstens eine Ladeposition zum Laden eines Produktes zur Zubereitung des Getränks, wenigstens zwei unterschiedliche Zubereitungspositionen, entsprechend zwei verschiedenen Größen der Brühkammer und eine Entladeposition zum Entladen des verbrauchten Produktes annehmen können.

Auch die EP 2 229 848 A1 offenbart eine Brühgruppe zum Zubereiten und zum Abgeben von Mengen, in auswählbaren variablen Volumina, von Aufgüssen, insbesondere von Kaffee, mittels unter Druck stehendem Wasser, welche eine zylindrische Brühkammer umfasst.

Der Brühkolben wird bei der Ausstoßbewegung unmittelbar vom drehbar gelagerten Steuerhebel angetrieben. Er wird im Betrieb zusammen mit der Brühkammer gegenüber den feststehenden Seitenwänden bzw. einer Kulisse daran auf- und abwärts verschoben und erhält daraus seinen Antrieb. Der Brühkolben ist für den Tresterauswurf sowohl in Zug- als auch in Druckrichtung mit der Brühgruppe weitgehend kinematisch gekoppelt. Um auch unterschiedliche Pulver- bzw. Trestervolumina auswerfen zu können, ohne zu verklemmen, hält der Brühkolben gegenüber dem Brühkammeroberteil einen Sicherheitsabstand ein. Damit können auch unplanmäßig große Volumina verpresst und ausgestoßen werden.

Aufgabe der Erfindung ist es, eine Brühgruppe anzugeben, bei der ein vollständiger Ausstoß des Tresters unabhängig von seinem Volumen gewährleistet ist.

Diese Aufgabe wird bei der eingangs genannten Kniehebel-Brühgruppe erfindungsgemäß durch Auslenkmittel an der Kulisse gelöst, die eine trestervolumen-abhängige Auslenkung des Steuerhebels ermöglichen. Die Auslenkmittel erlauben es, die Auslenkbewegung des Steuerhebels in Abhängigkeit von der Größe des Trestervolumens sofort auszulösen. Die Erfindung wendet sich also ab von einer starren kinematischen Kopplung des Brühkolbens an den Bewegungsablauf der Brühkammer. Sie verfolgt vielmehr das Prinzip, die Auslenkung des Steuerhebels und damit die Verschiebebewegung des Brühkolbens zum Auswurf des Tresters von dessen Volumen insofern abhängig zu machen, als eine große Trestermenge eine andere Verpressbewegung des Brühkolbens auslöst als eine kleine. Gemeinsam ist ihnen aber, dass die Ausstoßbewegung des Brühkolbens einsetzt, sobald die Brühkammer vom feststehenden Brühkammeroberteil abwärts bewegt wird. Die Auslenkmittel greifen dazu am Steuerhebel nach seiner Aufwärtsbewegung auf das Brühkammeroberteil hin in seiner dem Brühkammeroberteil nahestmöglichen Position an, die das Trestervolumen zulässt. Dazu findet jedoch keine vollständige kinematische Entkopplung zwischen dem Brühkolben und der übrigen Brühgruppe statt. Mit größerem, z. B. sensorischem Aufwand wäre dies ggf. auch elektronisch zu erreichen. Der Erfindung gelingt es aber, mit einfachen mechanischen Mitteln eine weitgehend gleichartige Verpressung des Tresters unabhängig von seinem Volumen, das gängigerweise in einem Bereich von 5g bis 15g liegt, zu erreichen und ihn zuverlässig und vollständig auszuwerfen. Vor allem geringere als planmäßige Trestervolumina lassen sich erfindungsgemäß ausreichend verpressen, dadurch entwässern und vollständig auswerfen.

Bekannte Steuerhebel für den Brühkolben umfassen regelmäßig zwei radial abstehende Steuerflügel, die als Hebelarme fungieren, durch eine Relativverschiebung gegenüber der Kulisse in den Seitenwänden angetrieben werden und dadurch zu einem Verschwenken des Steuerhebels führen. Durch die Relativverschiebung des Steuerhebels zusammen mit der Brühkammer relativ zu den Seitenwänden laufen die Steuerflügel an Vorsprüngen der Kulisse an, werden bei einer fortgesetzten Bewegung der Brühkammer verschwenkt und drehen dadurch den Steuerhebel. Nach einer vorteilhaften Ausgestaltung der Erfindung können die Auslenkmittel zur trestervolumen-abhängigen Auslenkung des Steuerhebels gestaffelt angeordnete Anlaufkanten in der Kulisse umfassen. Denn je nach Trestervolumen unterscheidet sich auch die Stellung des Brühkolbens und mit ihm diejenige des kinematisch gekoppelten Steuerhebels. Die unterschiedlichen Stellungen des Steuerhebels bei unterschiedlichen Trestervolumina können genutzt werden, um jeweils darauf abgestimmte Anschläge an der Kulisse zu positionieren. Damit entfällt das Erfordernis eines Sicherheitsabstandes des Brühkolbens gegenüber dem Brühkolbenoberteil beim Verpressen und Auswurf des Tresters, um ein Verklemmen zu vermeiden. Der Steuerhebel kann vielmehr unter Berücksichtigung des Trestervolumens derart angesteuert werden, dass er den Trester mit einer definierten Kraft beaufschlagt, verpresst und anschließend vollständig auswerfen kann. Die in einer Bewegungsrichtung der Steuerflügel hintereinander gestaffelt angeordneten Anlaufkanten bilden damit eine einfache, zuverlässige, aber mehrstufige Mechanik zur Auslenkung des Steuerhebels.

Der Bauraum innerhalb der Brühgruppe ist beschränkt. Die Auslenkmittel für unterschiedliche Trestervolumina können daher keinen beliebigen Platz einnehmen. Erfindungsgemäß sind die Anlaufkanten daher der Höhe nach bzw. orthogonal zur Bewegungsrichtung der Steuerflügel in der Kulisse gestaffelt angeordnet. Da die Steuerflügel ohnehin in einer Biegerichtung orthogonal zu ihrer Schwenkebene biegsam ausgebildet sind, können auch die Auslenkmittel auf diese Eigenschaft der Steuerflügel ausgelegt sein und in einer Biegerichtung der Steuerflügel gestaffelt sein. Je nach Trestervolumen können dann die Steuerflügel bei einer Aufwärtsbewegung über abgetreppte Anlaufkanten hinweg verschoben werden und stufenweise hinter obere oder nachfolgende tiefer liegende Anlaufkanten schnappen. Bei einer anschließenden Gegenbewegung der Brühkammer bilden die Anlaufkanten einen Anschlag, der die Steuerflügel auslenkt.

Nach einer weiteren vorteilhaften Ausgestaltung der Erfindung können die Auslenkmittel als Rasten ausgebildet sein, in die die Steuerflügel im Betrieb der Brühgruppe einrasten. Im Gegensatz zu Anlaufkanten können die Rasten die Steuerflügel grundsätzlich in zwei entgegengesetzten Richtungen festhalten. Abweichend von nicht überwindbaren Anlaufkanten bieten sie jedoch eine definierte Festhaltekraft für die Steuerflügel, die ggf. auch überwunden werden kann. Auch dafür wird die Elastizität der Steuerflügel genutzt, die bei der Aufwärtsbewegung der Brühkammer ggf. von Raste zu Raste weiter tung der Brühkammer können die Rasten eine gleiche oder davon abweichende Haltekraft entwickeln, um die Steuerflügel auszulenken. Die Haltekraft der Rasten kann einerseits durch ihre Form bestimmt und in einer Hin- und Rückrichtung der Bewegung der Steuerflügel gleich oder unterschiedlich gestaltet werden, beispielsweise durch unterschiedlich geneigte Abschrägungen der Rastflächen, die die Steuerflügel überstreichen. Zum anderen wird die Haltekraft von der Flexibilität der Steuerflügel selbst bestimmt.

Greifen die Steuerflügel selbst in die Rasten ein, so ist der Platzbedarf dafür unter anderem durch die geometrischen Abmessungen der Steuerflügel selbst definiert, beispielsweise durch ihre Breite. Nach einer weiteren vorteilhaften Ausgestaltung der Erfindung verfügen die Steuerflügel daher auf ihrer den Rasten zugewandten Seite über kantenartige Vorsprünge, die mit den Rasten zusammenwirken. Die Vorsprünge können weitgehend beliebige Abmessungen aufweisen, vor allem aber schmaler sein als die Steuerflügel selbst. Damit lässt sich eine feinere Abstufung der Rasterung durch eine engere Anordnung der Rasten erreichen, die weitgehend unabhängig von der Breite der Steuerflügel ist.

Als Auslenkmittel eignen sich folglich all jene Vorrichtungen, die die Steuerflügel mit einer definierten Kraft festhalten, diese jedoch kraft- oder ortsabhängig wieder freigeben. Nach einer weiteren vorteilhaften Ausgestaltung der Erfindung umfassen die Auslenkmittel Reibflächen an der Kulissenführung oder an den Steuerflügeln, die die Steuerflügel bei ihrer Relativbewegung gegenüber den Seitenwänden und damit der Kulisse festhalten. Mangels konkreter Festhaltepunkte wie bei einer Rasterung oder abgestuften Anlaufkanten bietet diese Ausführungsform eine stufenlose Ansteuerung des Steuerhebels zur Auslenkung. Außerdem dürfte diese Ausführungsform geräuschärmer bei ihrer Bedienung sein als die Rasten oder Anlaufkanten als Auslenkmittel, über die die Steuerflügel wie vorgespannte Federn hinweg verschoben werden.

Nach einer weiteren vorteilhaften Ausgestaltung der Erfindung können die Reibflächen gummiert sein. Dadurch lassen sich hohe Haltekräfte hervorrufen, ohne dass die Steuerflügel gegenüber der Seitenwand bzw. der dortigen Reibfläche nennenswert vorgespannt sein müssten. Eine Gummierung lässt sich zudem problemlos nachträglich und nur teilflächig auftragen und ggf. erneuern, falls sie sich abnutzen sollte.

Der Kern der Erfindung liegt darin, eine sofortige Auslenkung des Steuerhebels zu ermöglichen, auch wenn er aufgrund unterschiedlicher Trestervolumina unterschiedliche Positionen relativ zur Kulisse an den Seitenwänden einnimmt. Damit entfällt das Erfordernis, einen Toleranzbereich vorzusehen, um ein Verklemmen des Brühkolbens gegenüber dem Brühkammeroberteil bei großen Trestervolumina auszuschließen. Nach einer weiteren vorteilhaften Ausgestaltung der Erfindung kann daher zusätzlich zu den Auslenkmitteln ein elastisches Element zwischen dem Antrieb des Steuerhebels und der Oberfläche des Brühkolbens angeordnet sein. Das elastische Element lässt sich planmäßig komprimieren und aktiviert daraus eine Rückstellkraft. Im Falle eines größeren Trestervolumens als dem planmäßigen bietet das elastische Element durch seine Kompression einen Längenausgleich im Verschiebungsweg des Brühkolbens, so dass er nicht verklemmen kann. Bei einem geringeren als einem planmäßigen Trestervolumen kann das elastische Element seine Rückstellkraft aktivieren und den Brühkolben nach Durchfahren seines planmäßigen Verschiebungswegs noch weiter gegen das Brühkolbenoberteil verfahren, um eine ausreichende Verdichtung des Tresters zu erzielen. Seine Elastizität kann das elastische Element aus einer Form- oder Materialelastizität oder aus einer Kombination aus beiden erhalten. Demzufolge kann es beispielsweise als metallene Blatt- oder Spiralfeder ausgebildet sein oder aus einem kompressiblen elastischen Material bestehen. Es kann an nahezu jedem Ort zwischen den Steuerflügeln und der tresterberührten Oberseite des Brühkolbens angebracht sein, beispielsweise in einer teleskopierbaren Kolbenstange oder in einem elastischen Arm des Steuerhebels. Weitere vorteilhafte Ausgestaltungen des elastischen Elements finden sich außerdem in der Anmeldung mit dem Anmelderzeichen Nr. 201101586 DE und dem Titel "Elastische Tresterverpressung" vom selben Anmeldetag wie die vorliegende Anmeldung.

Die eingangs genannte Aufgabe wird schließlich auch durch einen Kaffeevollautomaten mit einer Brühgruppe nach einem der oben beschriebenen Ausgestaltungsformen gelöst.

Das Prinzip der Erfindung wird nachfolgend anhand einer Zeichnung beispielshalber noch näher erläutert. In der Zeichnung zeigen:
- Figur 1:: eine erste perspektivische Teilansicht einer erfindungsgemäßen Brühgruppe,
- Figur 2:: eine weitere perspektivische Ansicht der Ausführungsform gemäß Figur 1, und
- Figur 3:: eine perspektivische Teilansicht einer weiteren Ausführungsform.

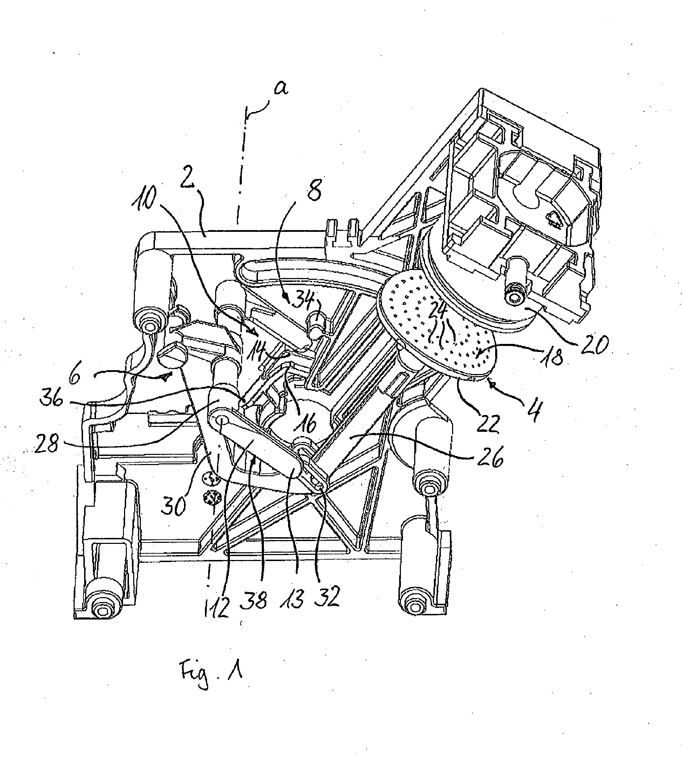

Figur 1 zeigt eine perspektivische Teilansicht einer erfindungsgemäßen Brühgruppe, bei der Teile der Brühgruppe der besseren Übersicht halber weggelassen wurden. Die Brühgruppe besteht regelmäßig aus zwei Seitenwänden 2, von denen nur eine, die hintere dargestellt ist. Die Brühgruppe enthält eine Brühkammer, die zwischen einem Brühkolben 4, einem feststehenden Brühkammeroberteil 20 und durch einen nicht dargestellten Brühzylinder gebildet wird. Der Brühkolben 4 besteht aus einem Kolbenteller 22 mit einer im Betrieb tresterberührten Oberseite 18 und einer Vielzahl darin konzentrisch angeordneter Durchtrittsöffnungen 24. Der Brühkolben 4 ist bekanntermaßen innerhalb des Brühzylinders verschiebbar gelagert und wird dazu von einer Kolbenstange 26 angetrieben. An ihrem dem Kolbenteller 22 abgewandten Ende ist die Kolbenstange 26 mit einem Steuerhebel 6 kinematisch gekoppelt. Der Steuerhebel 6 ist in herkömmlicher Weise über seinen Lagerbolzen 28 am Brühzylinder bzw. Gehäuse um eine Drehachse a drehbar gelagert. Der Lagerbolzen 28 erstreckt sich in einer Richtung senkrecht zu den Ebenen der Seitenwände 2 und trägt an seinen beiden Enden radial abstehende Steuerflügel 12 mit lagerbolzenfernen Steuerenden 13 und Steuerkanten 38. Vom Lagerbolzen 28 steht mittig ein abgewinkelter Steuerarm 30 ab, der an seinem Ende über Langlöcher 32 mit der Kolbenstange 26 drehverschiebbar gekoppelt ist.

Der drehbar gelagerte Steuerhebel 6 wird in an sich ebenfalls bekannter Weise zusammen mit dem Brühzylinder über einen ebenfalls nicht dargestellten Kniehebel innerhalb der Brühgruppe relativ zu den Seitenwänden 2 vor allem translatorisch verschoben. Die mehrteilige Kulisse 8 an den Seitenwänden 2 umfasst Anschläge 10, nämlich eine in der Ebene der Seitenwand 2 abgewinkelt verlaufende obere Anlaufkante 14, eine ebenso geformte untere Anlaufkante 16 und einen oberen Anschlag 34. Die Anlaufkanten 14, 16 sind in der Ebene der Seitenwände 2 gegeneinander versetzt und parallel zur Ebene der Seitenwände 2 der Höhe nach gestaffelt ausgebildet. Sie liegen damit in der Verschiebungsrichtung des Brühkolbens 4 stufenförmig abgetreppt übereinander. Sie gehen in eine gemeinsame Außenfläche 48 über, die senkrecht auf der jeweiligen Seitenwand 2 steht.

Die Anlaufkanten 14, 16 sorgen bei der Relativbewegung des Steuerhebels 6 gegenüber den Seitenwänden 2 für dessen Auslenkung: Der am Brühzylinder drehbar gelagerte Steuerhebel 6 läuft an den Anschlägen 10 mit den Steuerflügeln 12 an, die wie Hebelarme wirken und den Steuerhebel 6 entlang seiner Drehachse a des Lagerbolzens 28 verdrehen. Die Verdrehung des Lagerbolzens 28 führt zu einer Verschwenkung des Steuerarms 30, der wiederum über die Kolbenstange 26 für eine translatorische Verschiebung des Brühkolbens 4 gegenüber dem feststehenden Brühkammeroberteil 20 führt.

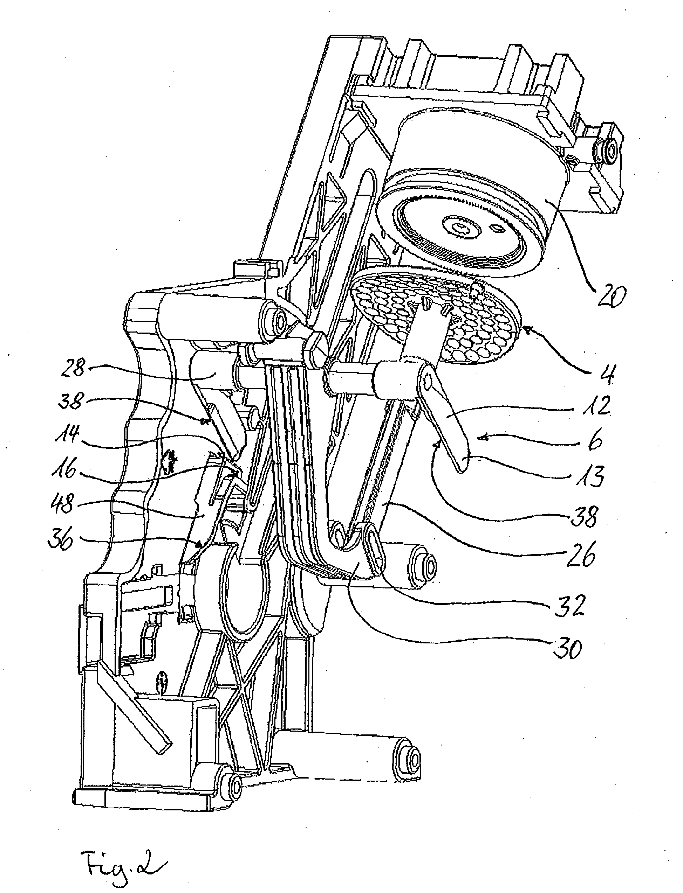

Die Kulisse 8 umfasst neben der oberen Anlaufkante 14 und der unteren Anlaufkante 16 in einer Verlängerung der Außenfläche 40 eine Anlaufschräge 36, die in Figur 2 gut zu erkennen ist. Bei einer Aufwärtsbewegung des Brühzylinders und des Steuerhebels 6 gegen das Brühkammeroberteil 20 laufen die Steuerflügel 12 gegen die Anlaufschrägen 36 an und lassen sich von ihnen von den Seitenwänden 2 weg nach innen drücken. Mit dem Aufwärtsfahren des Brühzylinders werden die Steuerflügel 12 zugleich abwärts gedrückt, so dass auch der Steuerarm 30 und mit ihm der Brühkolben 4 in einer entsprechenden unteren Position gehalten werden.

Der obere Anschlag 34 bildet eine Begrenzung der Aufwärtsbewegung. Der Steuerflügel 12 kann nicht über ihn hinweg verschoben werden, so dass er die Aufwärtsbewegung des Steuerhebels 6 beschränkt. In dieser Position ist jeder Steuerflügel 12 über die beiden Anlaufkanten 14, 16 hinweg geglitten und zurück in seine Ausgangsstellung Richtung Seitenwand 2 nach außen gesprungen. Seine Steuerenden 13 sind jetzt ohne Spiel und Toleranzen zwischen dem oberen Anschlag 34 einerseits und der unteren Anlaufkante 16 andererseits gehalten.

Diese Position stellt einen Umkehrpunkt für die Bewegung des Brühzylinders dar. Bei einer nun folgenden Abwärtsbewegung, die der Kniehebel dem Brühzylinder und damit dem drehbar daran gelagerten Steuerhebel 6 vermittelt, halten der obere Anschlag 34 und die untere Anlaufkante 16 die Steuerenden 13 fest. Die drehbare Lagerung des Steuerhebels 6 ermöglicht es ihm dennoch, zusammen mit dem Brühzylinder abwärts verschoben zu werden. Dabei lenkt die untere Anlaufkante 16 den Steuerflügel 12 aus und verdreht damit den Steuerhebel 6. Bei der weiteren Abwärtsbewegung gleitet der Steuerflügel 12 mit seiner Steuerkante 38 an der unteren Anlaufkante 16 entlang, bis er bei einer Drehung um etwa 90° freikommt und in dieser Stellung außerhalb der Anlaufschräge 36 an den Außenflächen 48 abwärts streift.

Der Steuerhebel 6 hat währenddessen den Brühkolben 4 innerhalb des Brühzylinders verschoben: Während der Brühzylinder abwärts fährt, schwenkt der sich drehende Steuerhebel 6 den Steuerarm 30 aufwärts und fährt damit den Brühkolben 4 innerhalb des Brühzylinders aufwärts. Dabei verschiebt der Brühkolben 4 den Tresterkuchen entgegen der Brühzylinderbewegung aufwärts gegen das feststehende Brühkammeroberteil 20. Er verdichtet dabei den Trester, um Restfeuchte auszupressen und ihm eine für den Auswurf geeignete Verdichtung zu verleihen. In der obersten Position des Brühkolbens 4 erhält der Trester auf der Oberseite 18 des Brühkolbens 4 eine Verdichtung von ca. 15 N/mm.

In diesem Moment kommen die Steuerenden 13 von der Anlaufkante 16 frei und gleiten an den Außenflächen 48 abwärts. Damit endet die Aufwärtsbewegung des Brühkolbens 4, und er fährt zusammen mit dem Brühzylinder abwärts. Dabei stößt der Brühkolben 4 den Tresterkuchen vollständig aus dem Brühzylinder aus, so dass er bei einer anschließenden Verschwenkung des Brühkammergehäuses abgestreift werden kann.

Je nach Befüllungszustand der Brühkammer nimmt der Brühkolben 4 naturgemäß nach der Verdichtung und Auslaugung des Kaffeepulvers eine andere relative Lage gegenüber dem feststehenden Brühkammeroberteil 20 ein: Bei einer geringeren als planmäßigen Befüllung der Brühkammer wird der Brühkolben 4 näher an das Brühkolbenoberteil 20 herangefahren, bei einer größeren als der planmäßigen Befüllung dagegen hält er einen größeren Abstand gegenüber dem feststehenden Brühkammeroberteil 20 ein. Durch die direkte kinematische Kopplung des Brühkolbens 4 mit dem Steuerhebel 6 bewirkt die unterschiedliche Stellung des Brühkolbens 4 eine ebenfalls unterschiedliche Verdrehstellung des Steuerhebels 6. Sie äußert sich in einer unterschiedlichen Neigung der Steuerflügel 12 in der obersten Stellung des Brühkammergehäuses bzw. an ihrem Umkehrpunkt und einer unterschiedlichen Lage der Steuerenden 13 gegenüber der Kulisse 8 bzw. ihren Anschlägen 10.

Zu diesem Zeitpunkt sind die Steuerflügel 12 über die Anlaufschräge 36 aufwärts geschoben und nach innen gedrückt worden. Bei einer geringeren Befüllung der Brühkammer nehmen die Steuerflügel 12 die in den Figuren 1 und 2 dargestellte Position ein und springen am Umkehrpunkt über die untere Anlaufkante 16 hinweg hinter die obere Anlaufkante 14. Ist die Brühkammer dagegen mit einer mehr als planmäßigen Kaffeepulvermenge befüllt, kann der Brühkolben 4 nicht so weit wie dargestellt gegen das Brühkammeroberteil 20 verschoben werden. Vielmehr verharrt er in einer Stellung leicht darunter, wodurch der Steuerhebel 6 stärker verdreht wird und die Steuerflügel 12 in eine stärker abwärts geneigte Position verschoben werden. Die Steuerenden 13 reichen jetzt nicht bis zur oberen Anlaufkante 14 herauf, sondern springen am Umkehrpunkt lediglich hinter die untere Anlaufkante 16. Dadurch werden sie beim anschließenden Abwärtsfahren des Brühkammergehäuses gegen die untere Anlaufkante 16 gedrückt, ebenfalls sofort ausgelenkt und können die geplante Verdichtungskraft auf den Brühkolben 4 ausüben. Anschließend erfolgt eine im Wesentlichen gleiche Bewegung wie oben bereits beschrieben.

Durch die Anordnung der beiden Anlaufkanten 14, 16 als Auslenkmittel kann erfindungsgemäß also eine trestermengenabhängige Auslenkung des Steuerhebels erzielt werden. Sie sorgt unabhängig von der Befüllung der Brühkammer mit einer über- oder unterplanmäßigen Kaffeepulvermenge für eine weitgehend gleiche, jedenfalls aber ausreichende Verdichtung des Kaffeetresters, um ihn vollständig ausstoßen zu können.

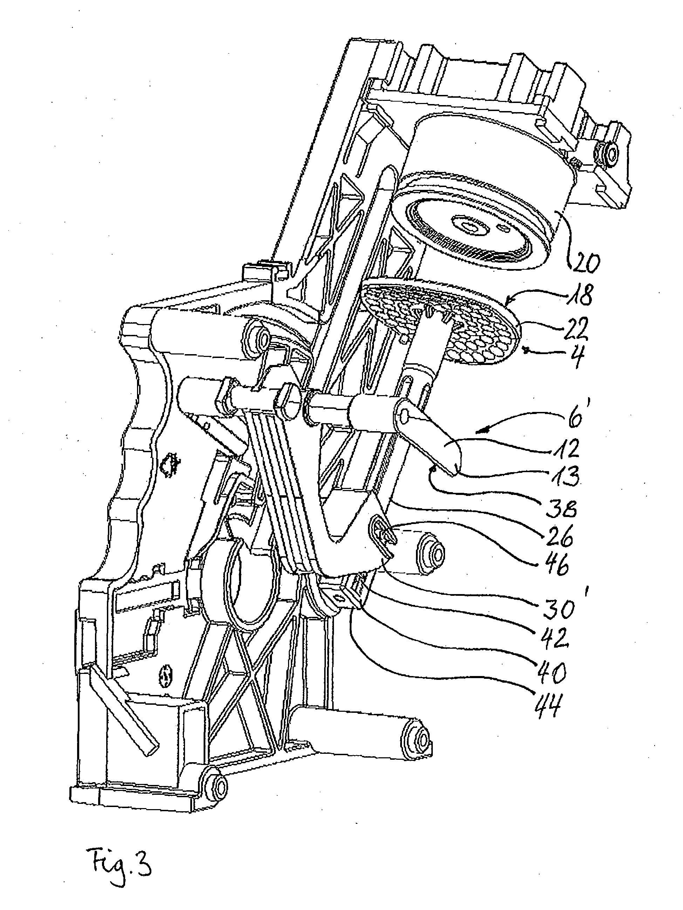

Figur 3 zeigt eine perspektivische Teilansicht einer Brühgruppe, die weitgehend derjenigen gemäß Figur 2 entspricht. Abweichend ihr gegenüber verfügt sie über einen etwas abgewandelten Steuerhebel 6', dessen Steuerarm 30' eine geringfügig veränderte Kopplung gegenüber der Kolbenstange 26 des Brühkolbens 4 aufweist. Der wesentliche Unterschied besteht darin, dass die Kolbenstange 26 an ihrem dem Kolbenteller 22 abgewandten Ende eine Hülse 40 umfasst, die die Kolbenstange 26 abwärts verlängert. Die Hülse enthält eine Spiralfeder als elastisches Element 42, die die Kolbenstange gegenüber einem Boden 44 der Hülse 40 abstützt. An der Hülse 40 sind außerdem zwei Zapfen 46 angebracht, die die Hülse 40 bzw. die Kolbenstange 26 in bekannter Weise mit dem Steuerhebel 6' mechanisch koppeln.

Das elastische Element 42 bewirkt bei einer Aufwärtsbewegung des Brühzylinders auf das feststehende Brühkammeroberteil 20 zu, dass der Brühkolben 4 bei beispielsweise einer geringer als planmäßigen Befüllung der Brühkammer in der obersten Stellung am Umkehrpunkt des Brühkammergehäuses seine Rückstellkraft aktiviert und den Brühkolben 4 auf das Brühkammeroberteil 20 zuschiebt. Auch eine geringere als planmäßige Befüllung der Brühkammer wird damit ausreichend verdichtet und verpresst, so dass der Trester anschließend vollständig und rückstandsfrei aus der Brühkammer ausgeworfen werden kann. Umgekehrt lässt sich das elastische Element komprimieren, so dass bei einer mehr als planmäßigen Befüllung der Brühkammer der Brühkolben 4 bei seiner Aufwärtsbewegung auf das Brühkammeroberteil 20 zu nicht verklemmt.

Da es sich bei den vorhergehenden, detailliert beschriebenen Brühgruppen um Ausführungsbeispiele handelt, können sie in üblicher Weise vom Fachmann in einem weiten Umfang modifiziert werden, ohne den durch die Patentansprüche definierten Bereich der Erfindung zu verlassen. Insbesondere können auch die konkreten Ausgestaltungen der Auslenkmittel in anderer Form als in der hier beschriebenen folgen. Ebenso kann der Steuerhebel in einer anderen Form ausgestaltet werden, wenn dies aus Platzgründen bzw. designerischen Gründen notwendig ist. Weiterhin schließt die Verwendung der unbestimmten Artikel "ein" bzw. "eine" nicht aus, dass die betreffenden Merkmale auch mehrfach vorhanden sein können.

### Bezugszeichenliste

- 2: Seitenwand
- 4: Brühkolben
- 6: Steuerhebel
- 8: Kulisse
- 10: Anschläge
- 12: Steuerflügel
- 13: Steuerende
- 14: obere Anlaufkante
- 16: untere Anlaufkante
- 18: Oberfläche des Brühkolbens
- 20: Brühkammeroberteil
- 22: Kolbenteller
- 24: Durchtrittsöffnungen
- 26: Kolbenstange
- 28: Lagerbolzen
- 30: Steuerarm
- 32: Langloch
- 34: oberer Anschlag
- 36: Anlaufschräge
- 38: Steuerkante
- 40: Hülse
- 42: elastisches Element
- 44: Boden
- 46: Zapfen
- 48: Außenfläche
- a: Drehachse

## Patentansprüche

1. Brühgruppe eines Kaffeevollautomaten für Haushaltszwecke mit zwei parallel angeordneten Seitenwänden (2), mit einer dazwischen angeordneten Brühkammer mit einem Brühzylinder, mit einem darin verschiebbar gelagerten Brühkolben (4), mit einem an der Brühkammer drehbar gelagerten Steuerhebel (6) mit Steuerflügeln (12) zum Antrieb des Brühkolbens (4), mit einer Kulisse (8) an den Seitenwänden (2) und mit Auslenkmitteln (10) an der Kulisse (8) zur Auslenkung des Steuerhebels (6), **gekennzeichnet durch** der Höhe nach gestaffelte Anlaufkanten (14; 16) in der Kulisse (8) für eine trestervolumen-abhängige Auslenkung des Steuerhebels (6).

2. Brühgruppe nach Anspruch 1 mit Steuerflügeln (12) am Steuerhebel (6), **gekennzeichnet durch** hintereinander gestaffelt angeordnete Anlaufkanten (14; 16) in der Kulisse (8) als Auslenkmittel.

3. Brühgruppe nach einem der obigen Ansprüche, **gekennzeichnet durch** Rasten als Auslenkmittel, in die die Steuerflügel im Betrieb der Brühgruppe einrasten.

4. Brühgruppe nach dem obigen Anspruch, **gekennzeichnet durch** Noppen an den Steuerflügeln, die mit den Rasten zusammenwirken.

5. Brühgruppe nach Anspruch 1 mit Steuerflügeln am Steuerhebel, **gekennzeichnet durch** Reibflächen als Auslenkmittel.

6. Brühgruppe nach Anspruch 5, **gekennzeichnet durch** gummierte Reibflächen an den Steuerflügeln.

7. Brühgruppe nach einem der obigen Ansprüche, mit einer tresterberührten Oberfläche (18) des Brühkolbens (4), **gekennzeichnet durch** ein elastisches Element (42) zwischen dem Antrieb des Steuerhebels (6) und der Oberfläche (18).

8. Kaffeevollautomat mit einer Brühgruppe nach einem der obigen Ansprüche.

## Claims

1. Brewing group of a fully-automatic coffee maker for household purposes with two side walls (2) disposed in parallel, with a brewing chamber with a brewing cylinder arranged between said side walls, with a brewing piston (4) supported movably therein, with a control lever (6) with control arms (12) for driving the brewing piston (4) supported rotatably on the brewing chamber, with a motion link (8) on the side walls (2) and with deflection means (10) on the motion link (8) for deflection of the control lever (6), **characterised by** leading edges (14; 16) graduated according to height in the motion link (8) for a marc-volume-dependent deflection of the control lever (6).

2. Brewing group according to claim 1 with control arms (12) on the control lever (6), **characterised by** leading edges (14; 16) arranged graduated one behind the other in the motion link (8) as deflection means.

3. Brewing group according to one of the above claims, **characterised by** notches as deflection means, into which the control arms latch during operation of the brewing group.

4. Brewing group according to the above claim, **characterised by** nipples on the control arms which interact with the notches.

5. Brewing group according to claim 1 with control arms on the control lever, **characterised by** friction surfaces as deflection means.

6. Brewing group according to claim 5, **characterised by** rubberized friction surfaces on the control arms.

7. Brewing group according to one of the above claims, with a marc-touching surface (18) of the brewing piston (4), **characterised by** an elastic element (42) between the drive of the control lever (6) and the surface (18).

8. Fully-automatic coffee maker with a brewing group according to one of the above claims.

## Revendications

1. Groupe de percolation d'une machine à café entièrement automatique à usage domestique, comprenant deux parois latérales (2) disposées parallèlement, comprenant une chambre de percolation disposée entre les deux parois latérales, munie d'un cylindre de percolation, comprenant un piston de percolation (4) qui y est logé de manière coulissante, comprenant un levier de commande (6) logé de manière rotative sur la chambre de percolation, doté d'ailettes de commande (12) pour entraîner le piston de percolation (4), comprenant une coulisse (8) sur les parois latérales (2) et comprenant des moyens de déviation (10) sur la coulisse (8), destinés à dévier le levier de commande (6), **caractérisé par** des bords d'arrivée (14 ; 16) échelonnés en hauteur dans la coulisse (8) pour une déviation du levier de commande (6) en fonction du volume de marc.

2. Groupe de percolation selon la revendication 1 comprenant des ailettes de commande (12) sur le levier de commande (6), **caractérisé par** des bords d'arrivée (14 ; 16) disposés de manière échelonnée les uns derrière les autres dans la coulisse (8) en tant que moyens de déviation.

3. Groupe de percolation selon l'une quelconque des revendications précédentes, **caractérisé par** des crans en tant que moyens de déviation, dans lesquels les ailettes de commande s'enclenchent pendant le fonctionnement du groupe de percolation.

4. Groupe de percolation selon la revendication précédente, **caractérisé par** des noppes sur les ailettes de commande, lesquelles coopèrent avec les crans.

5. Groupe de percolation selon la revendication 1, comprenant des ailettes de commande sur le levier de commande, **caractérisé par** des surfaces de frottement en tant que moyens de déviation.

6. Groupe de percolation selon la revendication 5, **caractérisé par** des surfaces de frottement caoutchoutées sur les ailettes de commande.

7. Groupe de percolation selon l'une quelconque des revendications précédentes, comprenant une surface (18) du piston de percolation (4), en contact avec le marc, **caractérisé par** un élément élastique (42) entre l'entraînement du levier de commande (6) et la surface (18).

8. Machine à café entièrement automatique comprenant un groupe de percolation selon l'une quelconque des revendications précédentes.
